# EUROPÄISCHE PATENTANMELDUNG

(11) **EP 1 950 106 A2**
(43) Veröffentlichungstag der Anmeldung: **30.07.2008**
(21) Anmeldenummer: 08001033.3
(22) Anmeldetag: 21.01.2008
(51) Int. Cl.: B60R 22/48

(54) **Gurtschloss für einen Sicherheitsgurt**

(30) Priorität: 24.01.2007 DE 102007003567
(71) Anmelder: SAIA-Burgess Oldenburg GmbH & Co. KG, 26127 Oldenburg (DE)
(72) Erfinder: Stenzel, Bruno, 26209 Hatten (DE)
(74) Vertreter: Jabbusch, Matthias

(57) **Zusammenfassung**

Bei einer Vorrichtung zum Aufnehmen und Arretieren eines Schlossteiles, insbesondere Gurtschloss eines Sicherheitsgurtes, mit mindestens einer Halterung für das Schlossteil, welche zumindest ein bewegliches, mit dem Schlossteil in arretierende Wirkverbindung bringbares Verriegelungselement aufweist, und mit einer mindestens ein elektrisches Schaltelement aufweisenden Abfrageeinrichtung zur Erfassung der Schließstellung der Halterung, ist das elektrische Schaltelement unmittelbar dem Verriegelungselement zugeordnet. Das Schaltelement weist ein in den Bewegungsraum des Verriegelungselementes vorstehendes Betätigungsorgan auf und ist als ein durch das Verriegelungselement betätigbarer Taster ausgebildet

## Beschreibung

Die Erfindung bezieht sich auf eine Vorrichtung zum Aufnehmen und Arretieren eines Schlossteiles, insbesondere Gurtschloss eines Sicherheitsgurtes, mit mindestens einer das Schlossteil wenigstens abschnittsweise einfassenden Halterung, welche zumindest ein bewegliches, mit dem Schloßteil in arretierende Wirkverbindung bringbares Verriegelungselement aufweist, und mit einer mindestens ein elektrisches Schaltelement aufweisenden Abfrageeinrichtung zur Erfassung der Schließstellung der Halterung.

Es sind Vorrichtungen bekannt, beispielsweise Gurtschlösser für ein mit wenigstens einem Sicherheitsgurt ausgerüstetes Transportmittel, insbesondere Kraftfahrzeug, welche Teil eines Rückhaltesystems sind, die wiederum zur Sicherung von Personen in einer Vielzahl von Transportmitteln eingesetzt werden. Bekannte Vorrichtungen weisen eine Halterung für ein in der Vorrichtung aufzunehmendes und zu arretierendes Schlossteil auf. Die Halterung ist mit einem beweglichen Verriegelungselement ausgestattet, welches nach dem Einführen des Schlossteiles in die Halterung üblicherweise selbsttätig verriegelt. Das Verriegelungselement greift dazu in eine Aussparung oder einen Durchbruch des Schlossteiles ein. Die dabei erzeugte formschlüssige Verbindung gewährleistet stets eine optimale Arretierung des Schlossteiles in der Halterung. Des weiteren weist die Vorrichtung eine Abfrageeinrichtung zur Erfassung der Schließstellung der Halterung auf, um gegebenenfalls ein nicht ordnungsgemäß in der Vorrichtung aufgenommenes Schlossteil zu detektieren und einen Hinweis in Form eines optischen bzw. akustischen Signals auszugeben. Die Abfrageeinrichtung weist dafür mindestens ein elektrisches Schaltelement auf, welches je nach Schließstellung der Halterung in eine vorbestimmte Schaltstellung gebracht wird und ein entsprechend zugeordnetes Signal erzeugt.

Bei Vorrichtungen bekannter Gattung werden gewöhnlich zusätzliche, mit dem Schaltelement mechanisch gekoppelte Funktionsteile eingesetzt, um eine Betätigung des Schaltelementes zu bewirken. Der Einsatz einer Mechanik, die beispielsweise über das Einschieben des Schlossteiles in die Halterung betätigbar ist und die wiederum auf das Schaltelement der Abfrageeinrichtung mechanisch einwirkt, hat stets eine konstruktiv aufwendige Ausgestaltung der Vorrichtung zur Folge. Des weiteren können sich gegebenenfalls an den zusätzlich in der Vorrichtung eingesetzten Funktionsteilen einer solchen Mechanik vermehrt Defekte einstellen, was eine verringerte Betriebssicherheit der Abfrageeinrichtung zur Folge hat.

Der Erfindung liegt die Aufgabe zugrunde eine Vorrichtung vorbezeichneter Gattung dahingehend zu verbessern, daß eine vereinfachte und zugleich kostengünstige Herstellung möglich ist.

Die Lösung der Aufgabe erfolgt erfindungsgemäß durch eine Vorrichtung mit den Merkmalen des Patentanspruchs 1. Vorteilhafte Weiterbildungen und Ausgestaltungen der Erfindung sind in den Ansprüchen 2 bis 12 angegeben.

Bei einer Vorrichtung der vorbezeichneten Gattung ist nach der Erfindung vorgesehen, daß das elektrische Schaltelement unmittelbar dem Verriegelungselement zugeordnet ist, wobei das Schaltelement ein in den Bewegungsraum des Verriegelungselementes vorstehendes Betätigungsorgan aufweist.

Mit Hilfe eines beispielsweise in den Schwenkweg eines Verriegelungselementes vorstehenden Schaltelementes ist eine vorteilhaft einfache Betätigung einer Abfrageeinrichtung zur Erfassung der Schließstellung der Halterung gegeben. Die direkte Betätigung des Schaltelementes durch das Verriegelungselement ohne Zwischenschaltung weiterer Funktionsteile stellt zudem eine konstruktiv einfache Ausgestaltung der Vorrichtung sicher. Aufgrund des Verzichtes des Einsatzes einer bestimmte Bewegungen und Kräfte übertragenden Mechanik ist somit neben einer vereinfachten Herstellung einer derartig erfindungsgemäß ausgebildeten Vorrichtung zugleich eine erhöhte Funktionssicherheit bzw. betriebssichere Langzeitfunktion gewährleistet.

Nach einer vorteilhaften Weiterbildung der Erfindung ist vorgesehen, daß das Schaltelement ein durch das Verriegelungselement betätigbarer Taster ist. Durch die Verwendung eines Tasters als Schaltelement ist eine vorteilhafte Möglichkeit zum Schließen oder Unterbrechen von Stromkreisen, insbesondere eines Stromkreises der Abfrageeinrichtung, gegeben. Der Taster hat des weiteren die vorteilhafte Eigenschaft, daß dieser nach seiner Betätigung selbsttätig in eine vorbestimmte Ruhestellung zurückkehrt. Das setzt voraus, daß am Betätigungsorgan eine der Verriegelungsbewegung des Verriegelungselementes entgegengesetzt wirkende Kraft angreift, beispielsweise hervorgerufen durch eine dauerhaft auf das Betätigungsorgan einwirkende Feder. Es ist selbstverständlich auch möglich, an Stelle eines Tasters andere elektromechanische Bauelemente, wie zum Beispiel einen Schalter, einzusetzen.

Das Schaltelement ist vorzugsweise als Schließer ausgebildet, der wenigstens zwei Anschlußkontakte miteinander elektrisch leitend verbindet. Mittels eines als Schließer ausgebildeten Schaltelementes läßt sich eine elektrisch leitende Verbindung insbesondere in einem Stromkreis der Abfrageeinrichtung herstellen und diesbezüglich kann ein für die Abfragefunktion benötigtes Spannungssignal vorbestimmter Höhe auf vorteilhaft einfache Weise in der Abfrageeinrichtung durchgeschaltet werden. Es ist selbstverständlich auch denkbar, das Schaltelement als Öffner zur Umsetzung einer Schaltfunktion auszubilden, der dann eine elektrisch leitende Verbindung zwischen den Anschlußkontakten eines Stromkreises der Abfrageeinrichtung unterbricht.

Das Schaltelement weist mindestens einen die Anschlußkontakte aufnehmenden Sockel auf, welcher mit Vorteil sowohl als Basis zur Ausbildung des Schaltelementes dient als auch die Funktion eines Isolators jeweils zwischen den auf dem Sockel aufgebrachten Anschlußkontakten übernimmt.

Um eine Isolationswirkung des Sockels sicherstellen zu können, wird zur Ausbildung des Sockels ein Material, insbesondere ein Nichtmetall, eingesetzt, welches einen möglichen Stromfluß mit Vorteil verhindert.

Der Sockel des Schaltelementes ist zumindest an einem schalenartigen Abdeckteil eines die Halterung nahezu vollständig einfassenden Gehäuses angeordnet. Die Anordnung des Schaltelementes an einem als Schlossschale ausgebildeten Abdeckteils des zumindest zweiteilig ausgebildeten Gehäuses ermöglicht eine vorteilhafte Anordnung des Schaltelementes im als Schwenkbereich ausgebildeten Bewegungsraum des Verriegelungselementes. Der Sockel des Schaltelementes kann mehrere als Durchbrüche ausgebildete Aufnahmen aufweisen, über die das Schaltelement mittels als Zapfen ausgebildeter Positionierelemente an der Innenseite des Abdeckteiles gehalten ist. Es ist ebenfalls denkbar, den Sockel des Schaltelementes mit der Innenseite des Abdeckteiles unter Verwendung eines Fügemittels, wie zum Beispiel eines Klebers, stoffschlüssig zu verbinden.

Nach einer Weiterbildung der Erfindung ist vorgesehen, daß der Sockel eine zumindest die Anschlußkontakte abschirmende Traufkante aufweist. Mittels der Traufkante soll beim Eindringen beispielsweise eines flüssigen Mediums in die erfindungsgemäße Vorrichtung ein direkter Kontakt der Anschlußkontakte des Schaltelementes mit dem Medium auf vorteilhafte Weise verhindert werden. Die Traufkante sorgt in diesem Fall für eine gezielte Abfuhr des Mediums, ohne daß eine ungewollte elektrisch leitende Verbindung zwischen den am Sockel angeordneten Anschlußkontakten verursacht wird.

Das Betätigungsorgan ist derart am Sockel des Schaltelementes angeordnet, daß die Kontaktflächen eines dem Betätigungsorgan zugeordneten Verbindungskontaktes, welcher mit den Anschlußkontakten in Anlage bringbar ist, entlang eines jeweiligen Kontaktbereiches verschieblich geführt sind. Beim Betätigungsvorgang werden die Kontaktflächen des Verbindungskontaktes unmittelbar nach dem Aufsetzen auf die am Sockel angeordneten Anschlußkontakte über einen Abschnitt eines jeweiligen Kontaktbereiches der Anschlußkontakte verschoben. Durch die Gleitbewegung bzw. Schleiffunktion des Verbindungskontaktes auf den Anschlußkontakten ist ein Überhub des Betätigungsorganes und damit des Verbindungskontaktes möglich. Mittels des Überhubs lassen sich mögliche Fertigungstoleranzen auf vorteilhafte Weise ausgleichen, was einen optimalen Kontakt zwischen den Anschlußkontakten und dem Verbindungskontakt gewährleistet. Des weiteren werden durch die Gleitbewegung der Oberflächen zueinander etwaige auf den Kontaktbereichen befindliche Verunreinigungen bzw. Oxidationsschichten entfernt.

Am Betätigungsorgan ist wenigstens eine Rückstellhilfe angeordnet, die eine zusätzliche auf das Betätigungsorgan einwirkende Kraft erzeugt, um dieses in seine Ruhestellung zurück zu bewegen. Die Rückstellhilfe hat dabei eine unterstützende Funktion zu mindestens einem elastisch ausgebildeten Verbindungselement, welches den Sockel mit dem Betätigungsorgan des Schaltelementes verbindet. Somit ist stets ein sicheres Abheben des Verbindungskontaktes von den Anschlußkontakten des Schaltelementes bei einer erfolgten Entriegelung des Schlossteiles in der erfindungsgemäßen Vorrichtung gewährleistet.

Jede Rückstellhilfe weist mindestens ein an vorbestimmten Flächenstücken abgleitendes Abstützteil auf, wodurch neben einer verbesserten Rückstellfunktion gleichzeitig die am Betätigungsorgan, aufgrund des daran angreifenden Verriegelungselementes, einwirkende Verriegelungskraft optimal aufgenommen ist. Eine übermäßige Materialbelastung an den elastisch ausgebildeten Verbindungselementen kann damit verhindert werden. Die freien Enden jeder Rückstellhilfe sind vorzugsweise als ein sich auf einem vorbestimmten Flächenstück abstützendes Auflager ausgebildet, um zugleich eine optimale Betätigung des Schaltelementes zu gewährleisten. Das freie Ende jeder Rückstellhilfe kann sich auf einer Kontaktfläche eines jeweiligen Anschlußkontaktes des Schaltelementes abstützen.

Nach einer anderen Weiterbildung der Erfindung ist vorgesehen, daß wenigstens der Verbindungskontakt mit zumindest einer punktförmig ausgebildeten Kontaktfläche für jeden Anschlußkontakt ausgerüstet ist. Die Ausgestaltung der Kontaktflächen beispielsweise als Kontaktpike oder -sicke bewirkt in Verbindung mit der Gleitbewegung des Verbindungskontaktes auf den Anschlußkontakten eine weiter verbesserte elektrisch leitende Verbindung, der jeweils aufeinander zu liegen kommenden Kontakte. Neben dem Verbindungskontakt können auch die Kontaktbereiche der Anschlußkontakte zum Beispiel mit einer Kontaktsicke versehen sein, die sich beispielsweise mittels eines Prägeverfahrens in entsprechend geeignete Kontaktmaterialien einbringen lassen.

Selbstständiger Schutz wird für eine Abfrageeinrichtung beantragt, welche in Verbindung mit einer Vorrichtung zum Aufnehmen und Arretieren eines Schlossteiles nach einem der Ansprüche 1 bis 11 eingesetzt werden kann. Erfindungsgemäße Abfrageeinrichtungen können insbesondere als Nachrüstsatz für bekannte Vorrichtungen angeboten werden, um eine Weiterverwendung bereits im Einsatz befindlicher Vorrichtungen zu gewährleisten. Die erfindungsgemäße Ausgestaltung der Abfrageeinrichtung stellt zudem eine universelle Einsetzbarkeit an den bekannten, insbesondere als Gurtschloss ausgebildeten Vorrichtungen sicher.

Ein Ausführungsbeispiel der Erfindung, aus dem sich weitere erfinderische Merkmale ergeben, ist in der Zeichnung dargestellt. Es zeigen:
- Fig. 1:: eine perspektivische Teilansicht einer Vorrichtung zum Aufnehmen und Arretieren eines Schlossteiles;
- Fig. 2:: ein erstes Ausführungsbeispiel eines Schaltelementes nach Fig. 1, und
- Fig. 3:: ein weiteres Ausführungsbeispiel eines Schaltelementes.

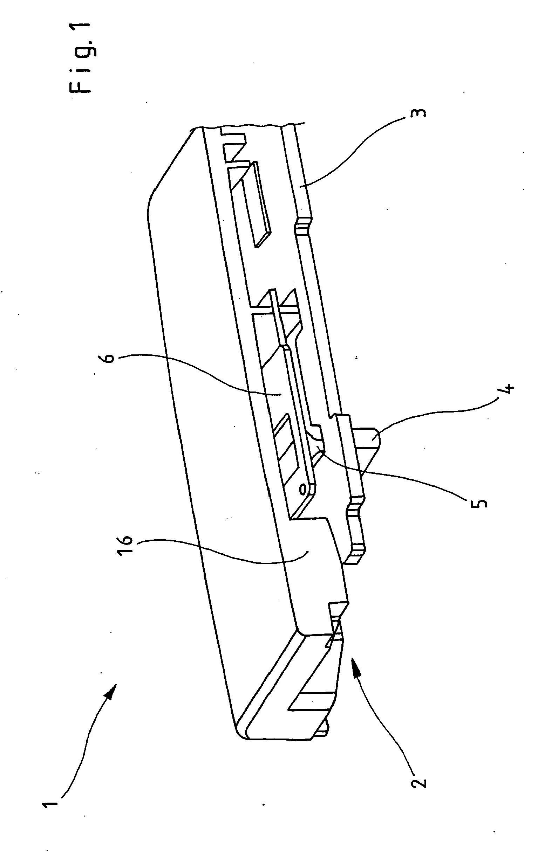

Fig. 1 zeigt eine Teilansicht einer Vorrichtung 1 zum Aufnehmen und Arretieren eines nicht dargestellten Schlossteiles, wobei der Pfeil 2 die Einsteckrichtung des Schlossteiles aufzeigt. Die Vorrichtung 1 weist eine Halterung 3 für das einführbare Schlossteil auf, die mit einem beweglichen, mit dem Schlossteil in arretierende Wirkverbindung bringbaren Verriegelungselement 4 ausgerüstet ist. Unmittelbar nach dem Einschieben des Schloßteiles in die Vorrichtung 1 führt das Verriegelungselement 4 eine Schwenkbewegung aus, die dazu führt, daß das Schlossteil in der Halterung 3 verriegelt ist und gleichzeitig ein in den Bewegungsraum des Verriegelungselementes 4 vorstehendes Betätigungsorgan 5 eines Schaltelementes 6 betätigt wird. Das Schaltelement 6 ist Teil einer Abfrageeinrichtung zur Erfassung der Schließstellung der Halterung 3, um die Arretierung des Schlossteiles in der Vorrichtung 1 detektieren zu können.

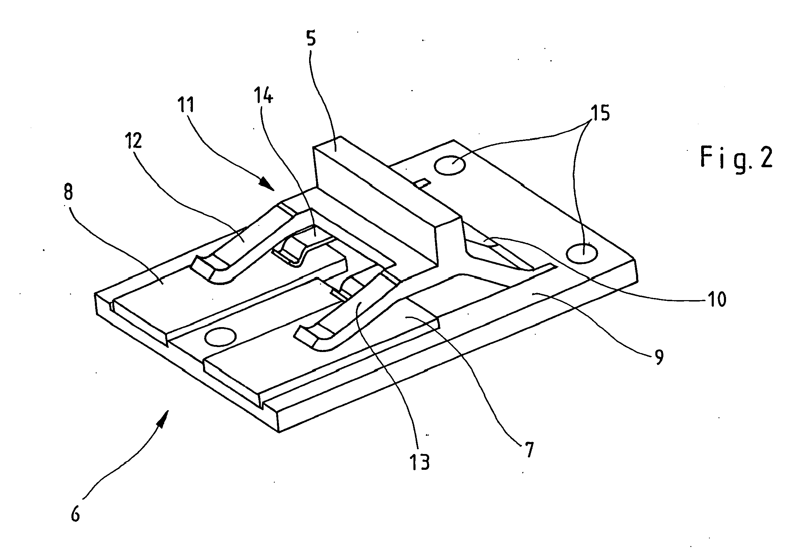

In Fig. 2 ist ein erstes Ausführungsbeispiel des Schaltelementes 6 dargestellt, das zwei Anschlußkontakte 7, 8 aufweist. Die Anschlußkontakte 7, 8 sind von einem als Trägerplatte ausgebildeten Sockel 9 aufgenommen, der gleichzeitig die Funktion eines Isolators hat und somit den direkten Stromfluß zwischen den Anschlußkontakten 7, 8 verhindert. Das Betätigungsorgan 5 ist mit dem Sockel 9 einstückig ausgebildet, welches über ein entsprechend elastisches Verbindungselement 10 am Sockel 9 federnd gehalten ist. Des weiteren weist das Betätigungsorgan 5 eine Rückstellhilfe 11 auf, welche zwei an den Kontaktbereichen der Anschlußkontakte 7, 8 abgleitende Abstützteile 12, 13 aufweist. Die Abstützteile 12, 13 sorgen, insbesondere nach Entlastung des Betätigungsorganes 5 durch das Verriegelungselement 4, für ein sicheres Abheben eines dem Betätigungsorgan 5 zugeordneten Verbindungskontaktes 14 von den Anschlußkontakten 7, 8. Das Schaltelement 6 weist des weiteren im Sockel 9 mehrere Aufnahmen 15 auf, mittels denen das Schaltelement 6 an einem als Schlosschale ausgebildeten Abdeckteil 16 (Fig. 1) eines die Halterung 3 nahezu vollständig einfassenden Gehäuses gehalten ist.

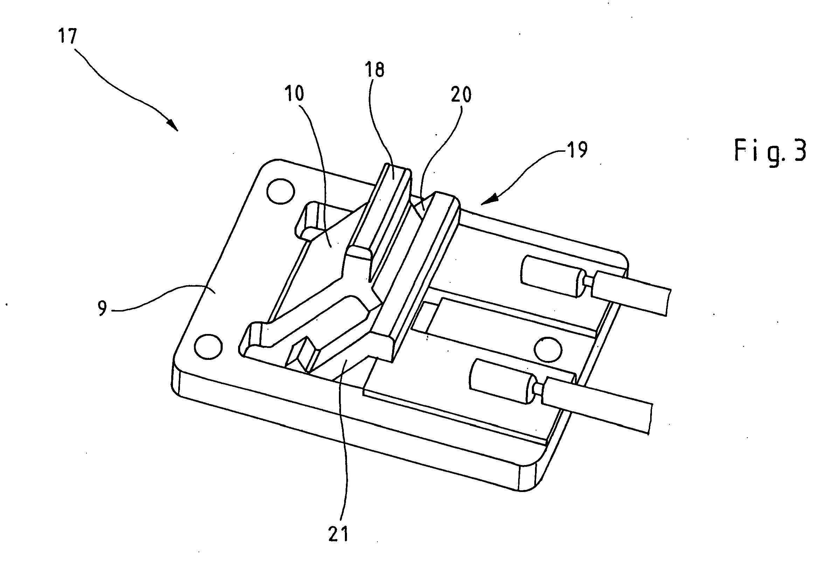

In Fig. 3 ist ein weiteres Ausführungsbeispiel eines Schaltelementes 17 dargestellt, an dessen Betätigungsorgan 18 eine Rückstellhilfe 19 angeordnet ist, die zwei sich unmittelbar auf der Innenseite des als Schlosschale ausgebildeten Abdeckteiles 16 abgleitende Abstützteile 20, 21 aufweist. Weiterhin sind gleiche Bauteile mit gleichen Bezugszahlen versehen.

## Patentansprüche

1. Vorrichtung zum Aufnehmen und Arretieren eines Schlossteiles, insbesondere Gurtschloss eines Sicherheitsgurtes, mit mindestens einer Halterung für das Schlossteil, welche zumindest ein bewegliches, mit dem Schlossteil in arretierende Wirkverbindung bringbares Verriegelungselement aufweist, und mit einer mindestens ein elektrisches Schaltelement aufweisenden Abfrageeinrichtung zur Erfassung der Schließstellung der Halterung,
**dadurch gekennzeichnet,**
**daß** das elektrische Schaltelement (6, 17) unmittelbar dem Verriegelungselement (4) zugeordnet ist, wobei das Schaltelement (6, 17) ein in den Bewegungsraum des Verriegelungselementes (4) vorstehendes Betätigungsorgan (5, 18) aufweist.

2. Vorrichtung nach Anspruch 1, **dadurch gekennzeichnet, daß** das Schaltelement (6, 17) ein durch das Verriegelungselement (4) betätigbarer Taster ist.

3. Vorrichtung nach einem der Ansprüche 1 und 2, **dadurch gekennzeichnet, daß** das Schaltelement (6, 17) als Schließer ausgebildet ist, der wenigstens zwei Anschlußkontakte (7, 8) miteinander elektrisch leitend verbindet.

4. Vorrichtung nach einem der Ansprüche 1 und 2, **dadurch gekennzeichnet, daß** das Schaltelement ein die elektrische Verbindung zwischen den Anschlußkontakten trennender Öffner ist.

5. Vorrichtung nach einem der Ansprüche 1 bis 4, **dadurch gekennzeichnet, daß** das Schaltelement (6, 17) mindestens einen die Anschlußkontakte (7, 8) aufnehmenden Sockel (9) aufweist.

6. Vorrichtung nach Anspruch 5, **dadurch gekennzeichnet, daß** der Sockel (9) an zumindest einem schalenartigen Abdeckteil (16) eines die Halterung (3) nahezu vollständig einfassenden Gehäuses angeordnet ist.

7. Vorrichtung nach einem der Ansprüche 5 und 6, **dadurch gekennzeichnet, daß** der Sockel (9) eine zumindest die Anschlußkontakte (7, 8) abschirmende Traufkante aufweist.

8. Vorrichtung nach einem der Ansprüche 1 bis 7, **dadurch gekennzeichnet, daß** das Betätigungsorgan (5, 18) am Sockel (9) des Schaltelementes (6, 17) derart angeordnet ist, daß die Kontaktflächen eines dem Betätigungsorgan (5, 18) zugeordneten Verbindungskontaktes (14), welcher mit den Anschlußkontakten (7, 8) in Anlage bringbar ist, entlang eines jeweiligen Kontaktbereiches verschieblich geführt ist.

9. Vorrichtung nach einem der Ansprüche 1 bis 8, **dadurch gekennzeichnet, daß** am Betätigungsorgan (5, 18) wenigstens eine Rückstellhilfe (11, 19) angeordnet ist.

10. Vorrichtung nach Anspruch 9, **dadurch gekennzeichnet, daß** jede Rückstellhilfe (11, 19) mindestens ein an vorbestimmten Flächenstücken abgleitendes Abstützteil (12, 13, 20, 21) aufweist.

11. Vorrichtung nach einem der Ansprüche 8 bis 10, **dadurch gekennzeichnet, daß** wenigstens der Verbindungskontakt (14) mit zumindest einer punktförmig als Sicke oder Kontaktpille ausgebildeten Kontaktfläche für jeden Anschlußkontakt (7, 8) ausgerüstet ist.

12. Abfrageeinrichtung für eine Vorrichtung (1) zum Aufnehmen und Arretieren eines Schlossteiles nach einem der Ansprüche 1 bis 11.
